(19) **Europäisches Patentamt**
**European Patent Office**
**Office européen des brevets**

(11) **EP 2 226 655 B1**

(12) **EUROPÄISCHE PATENTSCHRIFT**

(45) Veröffentlichungstag und Bekanntmachung des Hinweises auf die Patenterteilung:
**16.05.2012  Patentblatt 2012/20**

(51) Int Cl.:
***G01V 8/12*** *(2006.01)*

(21) Anmeldenummer: **09100159.4**

(22) Anmeldetag: **02.03.2009**

(54) **Optoelektronischer Sensor**

Optoelectronic sensor

Capteur optoélectronique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**08.09.2010  Patentblatt 2010/36**

(73) Patentinhaber: **SICK AG**
**79183 Waldkirch/Breisgau (DE)**

(72) Erfinder:
• **Märkle, Christoph**
**79104 Freiburg (DE)**

• **Klein, Michael**
**79183 Waldkirch (DE)**
• **Schindler, Bernhard**
**79263 Simonswald (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
EP-A- 1 503 226       EP-B- 0 891 044
DE-A1- 19 914 114    US-A- 5 496 996
US-A- 5 608 207

EP 2 226 655 B1

## Beschreibung

Die Erfindung betrifft einen optoelektronischen Sensor gemäß dem Oberbegriff des Anspruchs 1 sowie ein Verfahren zum Betrieb eines solchen Sensors nach Anspruch 9.

Aus der EP 1 503 226 A2 ist ein als Lichttaster ausgebildeter optischer Sensor bekannt mit einem Sender zum Aussenden von Sendelicht, einem Empfänger zum Empfang von an einem Objekt reflektierten Sendelichts und einer Auswerteeinheit, in der das elektronische Signal des Empfängers ausgewertet und bei Detektion von reflektiertem Sendelicht an einem Objekt ein Objektfeststellungssignal ausgegeben wird. Um auch strukturierte Objekte detektieren zu können, bei denen aufgrund der Strukturen nur ein Teil der Sendelichtstrahlen zum Empfänger zurückreflektiert wird, ist nach der EP 1 503 226 A2 vorgesehen, dass die Sendelichtstrahlen mit einer lichtstreuenden Folie beispielsweise linienförmig aufgeweitet werden, so dass das zu detektierende Objekt großflächiger beleuchtet wird und bei vorhandenem Objekt eine ausreichende Reflektion zur Detektion zur Verfügung steht. Wird also ein Mindestmaß an reflektiertem Licht empfangen, kann der Empfänger dies ermitteln und es wird ein Objektfeststellungssignal ausgegeben.

Aus der EP 0 891 044 B1 ist ein Verfahren zum Betrieb eines optoelektronischen Sensors bekannt, bei dem zur Erkennung von transparenten Gegenständen, wie Glasflaschen oder dergleichen, das Empfangssignal des Empfängers mit einem Erkennungs-Schwellwert verglichen wird und in Abhängigkeit davon ein Gegenstandsfeststellungssignal ausgegeben wird. Dieser Erkennungs-Schwellwert kann in Abhängigkeit des Empfangssignals geändert werden, so dass beispielsweise einer graduellen Verschmutzung der Optik zu einem gewissen Grade entgegengewirkt werden kann und eine Objekterkennung möglich bleibt.

Auch die US 5,496,996 zeigt eine solche Schwellwertanpassung bei der Detektion von transparenten Gegenständen.

Ebenso zeigen die DE 199 14 114 A1 und US 5,608,207 Lichtschranken, die Objekte durch Unterbrechungen der Lichtstrahlen detektieren, wobei Schaltschwellen nachgeregelt werden können, um eine Verschmutzung zu kompensieren.

Ausgehend von diesem Stand der Technik ist es Aufgabe der Erfindung, einen verbesserten optoelektronischen Sensor bereitzustellen, mit dem insbesondere opake Objekte, die nur von einem Teil des Sendelichts getroffen werden, verbessert detektiert werden können.

Diese Aufgabe wird gelöst durch einen Sensor mit den Merkmalen des Anspruchs 1 sowie ein Verfahren zum Betrieb eines solchen Sensors mit den Merkmalen des Anspruchs 9.

Ein solcher optoelektronischer Sensor zur Detektion von Paletten weist einen Sender zum Aussenden von Sendelicht, einen Empfänger zum Empfang des Sendelichts und zum Bereitstellen eines elektronischen Empfangssignals sowie eine Auswerteeinheit zum Aufnehmen des Empfangssignals und Ausgeben eines Detektionssignals, wenn in wenigstens einen Teil des Sendelichtstrahls ein opakes, zu detektierendes Objekt in Form eines Palettenbodens eintritt, auf. Die Sendeoptik ist derart ausgebildet, dass das Sendelichtprofil linienförmig ist und das Sendelicht parallel ist und eine kontinuierliche Detektionsebene zwischen Sender und Empfänger bzw. Reflektor definiert. Bei freiem Strahlengang wird über den Reflektor oder direkt vom Empfänger das Sendelicht empfangen. Weiter weist die Auswerteeinheit Mittel auf zur Bestimmung und Nachführung eines Erkennungs-Schwellwertes. Das Detektionssignal ist dann ausgebbar, wenn das Empfangssignal unterhalb des Erkennungs-Schwellwertes liegt, wenn der Palettenboden nur einen Teil des linienförmigen Sendelichts unterbricht.

Der wesentliche Vorteil des neuen Sensors besteht darin, dass damit eine zuverlässige Detektion von Objekten über einen gewissen Detektionsbereich möglich ist, wenn diese nur einen kleineren Teil des Sendelichts unterbrechen, so dass am Empfänger nur geringfügig weniger Licht empfangen wird, als bei freiem Strahlengang. Damit ist eine Lichtschranke geschaffen, die zuverlässig auch kleinste Änderungen des Empfangslichts erkennen kann. Der erfindungsgemäße Sensor kann somit auch Lichtgitter bzw. Lichtvorhänge, die ebenfalls eine Ebene mit diskreter Auflösung, die beim Lichtgitter dem Abstand der Einzelstrahlen entspricht, überwachen können, ersetzen.

Besonders vorteilhaft kann ein solcher Sensor beispielsweise zur sicheren Detektion von Paletten unterschiedlicher Höhe eingesetzt werden, wenn nämlich das linienförmige Sendelichtprofil senkrecht zur Palette, also in der Regel vertikal, ausgerichtet ist und das Sendelicht von dem Palettenboden unterbrochen wird. Für eine solche Detektion von Paletten wurden bisher entweder schräg ausgerichtete klassische Lichtschranken, die jedoch prinzipbedingt bei beschädigten Paletten (fehlende Deckbretter) zu Fehlschaltungen führen können, oder eben ausgerichtete Lichtgitter, die prinzipiell ebenfalls über einen linienförmig ausgedehnten Bereich mit einer gewissen Auflösung Gegenstände, die die einzelnen Strahlen des Lichtgitters unterbrechen, detektieren können, eingesetzt. Der erfindungsgemäße Sensor hat demgegenüber aber zahlreiche Vorteile, indem er zwar die erhöhte Sicherheit eines Lichtgitters bietet, demgegenüber aber kostengünstiger ist sowie eine erhöhte Schaltfrequenz hat, da nicht eine Vielzahl von Lichtstrahlen ausgewertet werden müssen. Des Weiteren weist der erfindungsgemäße Sensor eine kontinuierliche Detektionsebene, und kein Rastermaß wie ein Lichtgitter, auf. Eine für Einzelstrahlen eines Lichtgitters notwendige Justageanforderung entfällt.

In einer einfachen Ausgestaltung der Erfindung kann der Empfänger als einfache kostengünstige Photodiode ausgebildet sein, da aufgrund der Nachführung des Erkennungs-Schwellwertes keine Ortauflösung am Empfänger notwendig ist und trotzdem kleinere Änderungen des Empfangslichts erkannt werden.

In einer Weiterbildung der Erfindung ist dem Sender eine Sendeoptik und/oder dem Empfänger eine Empfangsoptik zugeordnet, um das gewünschte Sendelichtprofil zu und einen gewünschten Sichtbereich für den Empfänger erhalten.

Das gewünschte Sendelichtprofil besteht bevorzugt aus einem annähernd parallelen Sendelichtstrahlenverlauf, denn dann ist das Empfangssignal unabhängig von der Position des zu detektieren Objektes im Strahlengang.

Durch die Verwendung einer Stufenlinse kann der durch die optischen Randbedingungen hierfür erforderliche Bauraum (Abstand zwischen Sender bzw. Empfänger und zugeordneter Linse) reduziert werden.

Vorteilhafterweise sind Sender, Empfänger und Auswerteeinheit gemeinsam in einem Sensorgehäuse angeordnet, das mit einer Frontscheibe abgedeckt ist, durch die Sende und Empfangslicht treten.

Die Frontscheibe kann zumindest in einem Abschnitt, der von dem Sendelicht oder dem Empfangslicht durchsetzt wird, lichtabsorbierende Muster aufweisen, die dazu dienen, das im Querschnitt linienförmige Sende- oder Empfangslicht zu homogenisieren, so dass möglichst über die gesamte Linie gleiche Lichtintensität vorliegt.

Um ein optisches Übersprechen innerhalb des Sensorgehäuses vom Sender zum Empfänger zu verhindern, ist in Weiterbildung der Erfindung zwischen Sender und gegebenenfalls Sendeoptik sowie Empfänger und gegebenenfalls Empfangsoptik eine optische Trennwand vorgesehen.

Die erfindungsgemäße Aufgabe wird auch gelöst durch ein Verfahren zur Detektion von Paletten mit einem optoelektronischen Sensors mit folgenden Verfahrensschritten:

- Aussenden eines quer zur Sendestrahlrichtung linienförmig ausgedehnten, parallelen Sendelichts in eine kontinuierliche Detektionsebene,
- Empfangen des Sendelichts mit einem Empfänger und Bereitstellen eines elektronischen Empfangssignals, wobei bei freiem Strahlengang das Sendelicht direkt oder über einen Reflektor vom Empfänger empfangen wird,
- Vergleichen des Empfangssignals bei teilweisem Unterbrechen des Sendelichts durch ein opakes, zu detektierendes Objekt in Form eines Palettenbodens mit einem Erkennungs-Schwellwert, der einem festgelegten Prozentsatz des Empfangssignals bei freiem Strahlengang entspricht,
- Ausgabe eines Detektionssignals in Abhängigkeit dieses Vergleichs, Nachführen des Erkennungs-Schwellwertes nach Ablauf einer bestimmten Zeit.

Mit diesen erfindungsgemäßen Verfahren ist eine geschickte, weil relativ einfache Nachführung des Erkennungs-Schwellwertes gegeben, die eine zuverlässige Detektion von Objekten, die nur einen kleineren Teil des Sendelichts unterbrechen, auch außerhalb Reinraumbedingungen erlaubt. In gewissen Zeitabständen wird dabei das Empfangssignal bei freiem Strahlengang gemessen und immer ein fester Prozentsatz davon als neuer Erkennungs-Schweltwert definiert. Auf diese Weise können Langzeiteffekte, wie graduelle Verschmutzung der Optik oder Alterungsprozesse wirksam eliminiert werden.

In einer anfänglichen Einlernphase (teach-in) kann das Empfangssignal bei freiem Strahlengang erstmalig automatisch eingelernt werden. Diese Einlernphase kann beispielsweise manuell ausgelöst werden.

Im Folgenden wird die Erfindung anhand eines Ausführungsbeispieles unter Bezugnahme auf die Zeichnung im Einzelnen erläutert. In der Zeichnung zeigen:

Fig. 1 und 2 eine schematische Darstellung des erfindungsgemäßen Sensors in einer Anwendung aus zwei verschiedenen Richtungen gesehen;

Fig. 3 und 4 Strahlprofile des Sendelichts;

Fig. 5 eine schematische Darstellung einer Ausführungsform einer Frontscheibe;

Fig. 6 ein schematisches Diagramm des zeitlichen Verlaufs des Empfangssignals zur Darstellung der Funktionsweise des erfindungsgemäßen Sensors.

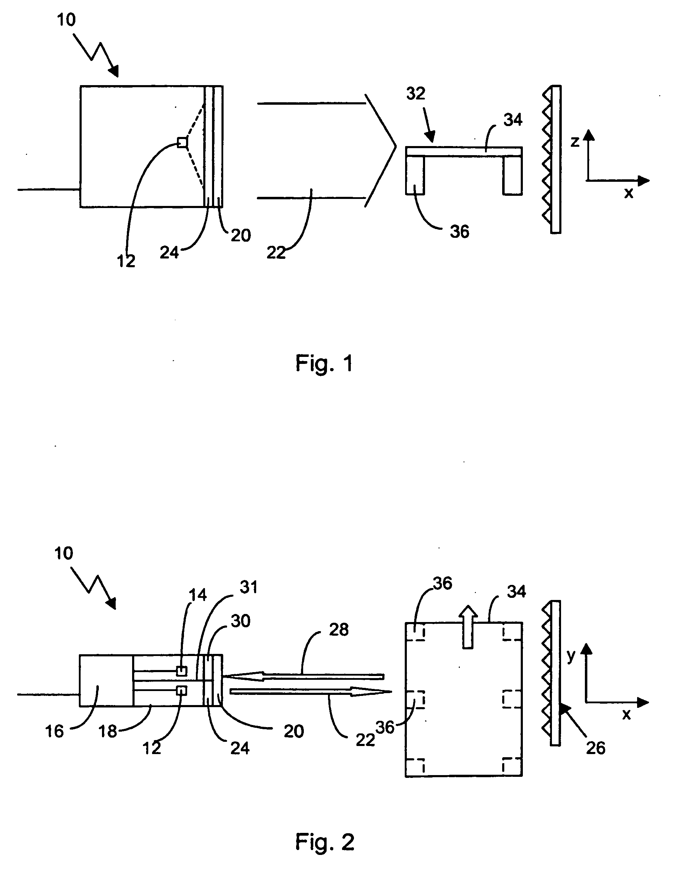

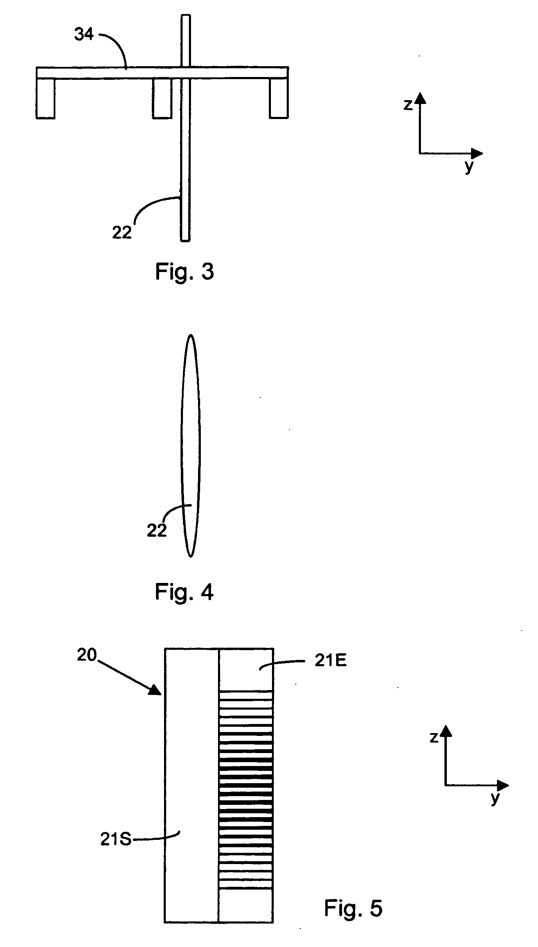

Ein erfindungsgemäßer Sensor 10 ist als Lichtschranke ausgebildet und beispielhaft als Reflektions-Lichtschranke in den Fig. 1 und 2 dargestellt. Der Sensor 10 weist einen Sender 12, einen beispielsweise als Photodiode ausgebildeten Empfänger 14 und eine Auswerteeinheit 16 auf. Sender 12, Empfänger 14 und Auswerteeinheit 16 sind in einem gemeinsamen Sensorgehäuse 18 angeordnet, das frontseitig mit einer Frontscheibe 20 abgedeckt ist. Das vom Sensor 12 ausgesandte Sendelicht 22 wird von einer dem Sender 12 zugeordneten Sendeoptik 24 etwa linienförmig aufgeweitet, so dass das den Sensor verlassende Sendelicht 22 ein etwa linienförmiges Sendeprofil aufweist, wie beispielsweise in den Fig. 3 und 4 dargestellt ist. Das den Sensor 10 verlassende Sendelicht 22 hat dabei einen annähernd parallelen Sendelichtstrahlenverlauf, wie aus der Darstellung in Fig. 1 schematisch erkennbar ist. Gemäß dem Ausführungsbeispiel nach Fig. 3 ist das Sendelicht 22 im Querschnitt nahezu rechteckförmig, wobei es sich um ein sehr schmales Rechteck handelt, um die Linienform zu erhalten. Das Sendelichtprofil in dem Ausführungsbeispiel nach Fig. 4 ist linienförmig durch eine in die Länge gezogene Ellipsenform gebildet. Das Sendelichtprofil wird durch Sendeoptik 24 bestimmt, die beispielsweise als Stufenlinse ausgebildet sein kann, wodurch der Abstand zwischen Sender 12 und Sendeoptik 24 zur Bauraumreduzierung minimal gehalten werden kann.

Die Linienform des Sendelichts 22 ist ebenfalls in den Fig. 1 und 2 zu erkennen, wobei in der Perspektive der Fig. 1 das Sendelicht 22 sehr schmal ist und in der Perspektive der Fig. 2 sehr breit, so dass das Sendelicht also in z-Richtung linienförmig ausgebildet und senkrecht zur Transportrichtung y vertikal ausgerichtet ist.

Bei freiem Strahlengang trifft das Sendelicht 22 auf einen Retroreflektor 26 und wird von diesem in gleiche Richtung zurückreflektiert zum Sensor 10 und dort als Empfangslicht 28 vom Empfänger 14, dem eine Empfängeroptik 30 vorgeordnet ist, empfangen. Die Empfängeroptik 30 bündelt das ebenfalls linienförmige Empfangslicht 28 auf den als Photodiode ausgebildeten Empfänger 14.

Damit kein optisches Übersprechen innerhalb des Gehäuses vom Sender zum Empfänger erfolgen kann, ist bevorzugt eine optische Trennwand 31 vorgesehen, die im Sensorgehäuse 18 Sende- und Empfangskanal trennt. Im Empfänger 14 wird das Empfangslicht in ein elektronisches Empfangssignal umgewandelt, das von der Auswerteeinheit 16 aufgenommen wird. In der Auswerteeinheit wird das Empfangssignal daraufhin ausgewertet, ob im Sendelicht 22 ein opakes Objekt vorhanden ist oder nicht und gegebenenfalls ein Detektionssignal ausgegeben.

In dem Ausführungsbeispiel nach den Fig. 1 und 2 dient der erfindungsgemäße Sensor 10 zur Detektion von Paletten 32. Eine Palette 32 weist einen Palettenboden 34 und Palettenfüße 36 auf. Der optoelektronische Sensor 10 ist nun derart ausgerichtet, dass die Sendelichtlinie senkrecht zum Palettenboden 34 verläuft, so dass bei Transport der Palette 32 in y-Richtung der Palettenboden 34 durch das Sendelicht 22 transportiert wird (siehe auch Fig. 3).

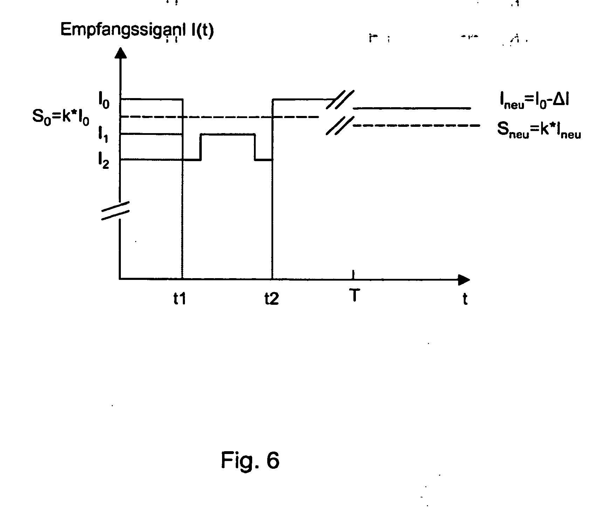

Da der Palettenboden 34 im Vergleich zur Ausdehnung des Sendelichts 22 in z-Richtung eine relativ kleine Ausdehnung hat, unterbricht er das Sendelicht nur abschnittsweise, so dass immer ein Großteil des Sendelichts den Reflektor 26 erreicht und in den Empfänger 14 zurückreflektiert wird. Eine besondere Aufgabe des erfindungsgemäßen Sensors ist es daher, eine relativ geringe Intensitätsänderung zu erkennen und möglichst zuverlässig und sicher ein Detektionssignal auszugeben, wenn eine Palette 32 sich zumindest mit ihrem Palettenboden 34 in dem Strahlengang befindet. Dazu arbeitet der Sensor 10 wie unter Bezugnahme auf Fig. 6 im Folgenden erläutert:

Zu Beginn wird zunächst bei freiem Strahlengang die empfangene Intensität am Empfänger 14 ermittelt und das entsprechende elektronische Empfangssignal $I_0$ gespeichert. Danach wird in der Auswerteeinheit 16 ein Erkennungs-Schwellwert $S_0$ festgelegt, der einem festgelegten Prozentsatz des Empfangssignals bei freiem Strahlengang entspricht.

$$S_0 = k \cdot I_0 \quad \text{mit } k < 1$$

Dieser Erkennungs-Schwellwert $S_0$ muss aber höher liegen als ein Empfangssignal $I_1$, das der empfangenen Intensität entspricht, wenn zumindest der Palettenboden 34 sich im Strahlengang des Sendelichts 22 befindet, beispielsweise in der Zeit zwischen t1 und t2. Dann ist gewährleistet, dass bei Unterschreiten des Erkennungs-Schwellwertes $S_0$ eine Palette vorhanden ist. Dies gilt selbstverständlich auch, wenn ein Palettenfuß 36 in den Strahlengang mit eintreten sollte, da das dann empfangene Signal $I_2$ noch kleiner ist als das Empfangssignal $I_1$, bei nur dem Palettenboden 34 im Sendelicht 22.

Nach Ablauf einer bestimmten Zeit T, dies können beispielsweise mehrere Sekunden oder sogar Minuten oder Stunden sein, wird das Empfangssignal $I_{neu}$ bei freiem Strahlengang, also ohne Paletten, automatisch erneut ermittelt und der bisherige, in der Auswerteeinheit 16 abgespeicherte Wert für $I_0$ überschrieben. Ausgehend von diesem neuen Empfangssignal $I_{neu}$ bei freiem Strahlengang wird ein neuer Erkennungs-Schwellwert $S_{neu}$ mit dem gleichen Prozentsatz errechnet und als neuer Erkennungs-Schwellwert $S_{neu}$ abgespeichert.

$$S_{neu} = k \cdot I_{neu}$$

Mit diesem neuen Erkennungs-Schwellwert $S_{neu}$ wird weitergearbeitet, bis nach erneutem Zeitablauf wieder ein neuer Erkennungs-Schwellwert auf gleiche Weise bestimmt wird. Auf diese Weise wird der Erkennungs-Schwellwert immer wieder nachgeführt. Wenn das Zeitintervall T sehr kurz ist, beispielsweise Sekunden, ist die Nachführung sogar quasi kontinuierlich.

Wie bereits oben erläutert, ist in den Fig. 3 und 4 jeweils ein Sendelichtprofil im Querschnitt schematisch dargestellt. Damit die Erkennung eines sich im Strahlengang 22 befindlichen Palettenbodens 34 unabhängig vom Ort des Auftretens des Palettenbodens 34 ist, sollte das Empfangssignal I1 unabhängig sein von der x- und z-Position.

Um die Unabhängigkeit in z-Richtung, also entlang der Sendelichtlinie, zu gewährleisten, sollte das Sendelicht homogen sein, was hohe Anforderungen an die Sendeoptik stellt. Diese lassen sich aber reduzieren, wenn die Homogenisierung auf andere Weise bewerkstelligt werden kann. Dazu ist in einer Weiterbildung der Erfindung vorgesehen, dass die Frontscheibe in dem Bereich 21S, durch den das Sendelicht 22 durch die Frontscheibe 20 tritt oder in dem Bereich 21 E, durch den das Empfangslicht 28 durch die Frontscheibe 20 tritt, musterartig bedruckt ist; so dass letztendlich das vom Sensor ausgesandte und wieder empfangene Licht in verschiedenen Bereichen der Frontscheibe unterschiedlich stark gedämpft wird, so dass letztendlich eine Homogenisierung des Sendelichts in z-Richtung aus Sicht des Empfängers 14 auftritt. Die Muster zum Bedrucken der Frontscheibe können in verschiedenster Art und Weise ausgebildet sein. In Fig. 5 ist beispielhaft ein Streifenmuster dargestellt, das in z-Richtung das Sendelicht zentral mehr dämpft als zu den Rändern oben und unten hin. Eine Bedruckung nur des empfängerseitigen Bereichs 21 E ist vorteilhaft, da dann das Sendelicht mit voller Lichtstärke austritt und Reflektionen des Sendelichts an einem Objekt, z.B. dem Palettenboden 34, mit bloßem Auge zu Justagezwecken leichter erkannt werden können.

Die Unabhängigkeit in x-Richtung wird dadurch gewährleistet, dass das vom Sensor 10 ausgesandte Sendelicht 22 durch die Sendeoptik 24 parallel ausgerichtet ist.

Insgesamt ist damit ein optoelektronischer Sensor geschaffen, mit dem ein Objekt detektiert werden kann, wenn es sich in dem durch den Sendelichtstrahlengang 22 spezifizierten, in z-Richtung ausgedehnten Detektionsbereich befindet, wobei das opake Objekt eine bestimmte Mindestabdeckung des Sendelichts verursachen muss, damit das Empfangssignal zur Detektion unter eine vorgegebene Schwelle fällt.

**Patentansprüche**

1. Optoelektronischer Sensor zur Detektion von Paletten (32) mit einem Sender (12) und einer Sendeoptik (24) zum Aussenden von Sendelicht (22), einem Empfänger (14) zum Empfang des Sendelichts (28) und zum Bereitstellen eines elektronischen Empfangssignals (I), einer Auswerteeinheit (16) zum Aufnehmen des Empfangssignals (I) und Ausgeben eines Detektionssignals, wenn in wenigstens einen Teil des Sendelichtstrahls (22) ein opakes, zu detektierendes Objekt (36) in Form eines Palettenbodens (34) eintritt, **dadurch gekennzeichnet, dass** die Sendeoptik (24) derart ausgebildet ist, dass das Sendelichtprofil (22) linienförmig ist und das Sendelicht parallel ist und eine kontinuierliche Detektionsebene zwischen Sender und Empfänger bzw. Reflektor (26) quer zum Palettenboden (34) definiert, und bei freiem Strahlengang über einen Reflektor (26) oder direkt vom Empfänger (14) empfangen wird und dass die Auswerteeinheit (16) Mittel aufweist zur Bestimmung und Nachführung eines Erkennungs-Schwellwertes (S) und dass das Detektionssignal ausgebbar ist, wenn das Empfangssignal (I) unterhalb des Erkennungs-Schwellwertes (S) liegt, wenn der Palettenboden (34) nur einen Teil des linienförmigen Sendelichts (22) unterbricht.

2. Sensor nach Anspruch 1, **dadurch gekennzeichnet, dass** der Empfänger (14) als einfache Photodiode ausgebildet ist.

3. Sensor nach einem der vorhergehenden Ansprüche, **dadurch gekennzeichnet, dass** dem Empfänger (14) eine Empfangsoptik (30) zugeordnet ist.

4. Sensor nach Anspruch 3, **dadurch gekennzeichnet, dass** das Sendelicht durch die Sendeoptik (24) einen annähernd parallelen Sendelichtstrahlenverlauf erhält.

5. Sensor nach Anspruch 3 oder 4, **dadurch gekennzeichnet, dass** die Sende- und/oder Empfangsoptik (24, 30) eine Stufenlinse aufweist.

6. Optoelektronischer Sensor nach einem der vorhergehenden Ansprüche, **dadurch gekennzeichnet, dass** zumindest der Sender (12) mit der gegebenenfalls vorgesehenen Sendeoptik (24) in einem eine Frontscheibe (20) aufweisenden Sensorgehäuse (18) angeordnet ist und die Frontscheibe (20) abschnittsweise mit Sendelicht absorbierenden Mustern zur Sendelichthomogenisierung bedruckt ist.

7. Optoelektronischer Sensor nach einem der vorhergehenden Ansprüche, **dadurch gekennzeichnet, dass** Sender (12), Empfänger (14) und Auswerteeinheit (16) gemeinsam in dem Sensorgehäuse (18) angeordnet sind.

8. Optoelektronischer Sensor nach Anspruch 7, **dadurch gekennzeichnet, dass** zwischen Sender (12) und gegebenenfalls Sendeoptik (24) sowie Empfänger (16) und gegebenenfalls Empfangsoptik (30) eine optische Trennwand (31) vorgesehen ist.

9. Verfahren zum Detektion von Paletten (32) mit einem optoelektronischen Sensor nach einem der vorhergehenden Ansprüche **gekennzeichnet durch** folgende Verfahrensschritte

    - Aussenden eines quer zur Sendestrahlrichtung linienförmig ausgedehnten und parallelen Sendelichts (22) in eine kontinuierliche Detektionsebene
    - Empfangen des Sendelichts (22) mit einem Empfänger (14) und Bereitstellen eines elektronischen Empfangssignals (I), wobei bei freiem Strahlengang das Sendelicht (22) direkt oder über einen Reflektor (26) vom Empfänger (14) empfangen wird,
    - Vergleichen des Empfangssignals (I) bei teilweisem Unterbrechen des Sendelichts (22) **durch** ein opakes, zu detektierendes Objekt (36) in Form eines Palettenbodens (34) mit einem Erkennungs-Schwellwert (S), der einem festlegbaren Prozentsatz des Empfangssignals bei freiem Strahlengang entspricht,
- Ausgabe eines Detektionssignals in Abhängigkeit dieses Vergleichs,
- Nachführen des Erkennungs-Schwellwertes (S) nach Ablauf einer bestimmten Zeit (T).

**10.** Verfahren nach Anspruch 9, **dadurch gekennzeichnet, dass** nach Ablauf der bestimmten Zeit (T) das Empfangssignal bei freiem Strahlengang erneut bestimmt wird (I) und der Erkennungs-Schwellwert (S) an dieses zur Nachführung angepasst wird.

**11.** Verfahren nach einem der vorhergehenden Ansprüche 9 oder 10, **dadurch gekennzeichnet, dass** in einer Einlernphase (teach-in) das Empfangssignal bei freiem Strahlengang eingelernt wird.

**Claims**

**1.** Optoelectronic sensor for the detection of pallets (32) with a transmitter (12) and a transmitting optics (24) for emitting transmitted light (22), a receiver (14) for receiving the transmitted light (28) and for providing an electronic receiving signal (I), an evaluation unit (16) for receiving the receiving signal (I) and outputting a detection signal in case an opaque object (36) in the form of a pallet base (34) enters at least a portion of the transmitted light beam (22), **characterized in that** the transmitting optics (24) is constructed in such a way that the transmitted light profile (22) has a line form and the transmitted light is parallel and defines a continuous detection plane between the transmitter and the receiver or reflector (26) cross the pallet base (34), and the transmitted light is received directly or via a reflector (26) by the receiver (14), and **in that** the evaluation unit (16) comprises means for determining and adjusting a detection threshold (S) and **in that** the detection signal can be outputted if the received signal (I) is below the detection threshold (S) if the pallet base (34) interrupts only a portion of the transmitted light (22) having the line form cross section.

**2.** Sensor according to claim 1, charaterized in that the receiver (14) is designed as a simple photodiode.

**3.** Sensor according to any one of the preceding claims, **characterized in that** a receiving optics (30) is allocated to the receiver (14).

**4.** Sensor according to claim 3, **characterized in that** the transmitted light is made nearly parallel by the transmitting optics (24).

**5.** Sensor according to claim 3 or 4, **characterized in that** the transmitting and/or receiving optics (24, 30) comprise a Fresnel lens.

**6.** Sensor according to any one of the preceding claims, **characterized in that** at least the transmitter (12) with the optionally provided transmitting optics (24) is provided in a sensor housing (18) with a front window (20) and the front window (20) is imprinted in sections with a pattern which absorbs the transmitted light for homogenization of the transmitted light.

**7.** Optoelectronic sensor according to any one of the preceding claims, **characterized in that** said transmitter (12), receiver (14) and evaluation unit (16) are arranged together in the sensor housing (18).

**8.** Optoelectronic sensor according to claim 7, **characterized in that** an optical divider (31) is arranged between the transmitter (12) with possible transmitting optics (24) and the receiver (16) with possible receiving optics (30).

**9.** Method for detection of pallets (32) with an optoelectronic sensor according to any one of the preceding claims **characterized by** the following steps:

- transmitting a parallel transmitted light (22) which has a line form cross the beam direction into a continuous detection plane,
- receiving the transmitted light (22) with a receiver (14) and providing an electronic receiving signal (I), wherein the transmitted light (22) is received directly or via a reflector (26) by the receiver (14) in case of a free optical path,
- comparing the received signal (I) at partial interruption of the transmitted light (22) by an opaque object (36) to be detected in the form of a pallet base (34) with a detection threshold (S) which corresponds to a definable percentage of the received signal at free optical path,
- outputting a detection signal in response to this comparison,
- adjusting the detection threshold (S) after a certain time (T).

**10.** The method of claim 9, **characterized in that** after the certain time (T), the received signal at free optical path is determined again (I) and the detection threshold (S) is adapted for adjustments.

**11.** The method according to one of the preceding claims 9 or 10, **characterized in that** in a teaching phase (teach-in), the received signal will be taught in at free optical path.

**Revendications**

**1.** Capteur optoélectronique de détection des palettes (32) avec un émetteur (12) et un système optique de transmission (24) pour émettre de la lumière transmise (22), un récepteur (14) pour recevoir la lumière transmise (28) et pour fournir un signal électronique de réception (I), une unité d'évaluation (16) pour recevoir le signal de réception (I) et délivrer un signal de détection dans le cas où un objet opaque (36) sous la forme d'une base de palettes (34) pénètre dans une partie de faisceau lumineux transmis (22), **caractérisé en ce que** le système optique de transmission (24) est construit de telle manière que le profil de la lumière transmise (22) a une forme en ligne et que la lumière transmise est parallèle et définit un plan de détection en continu entre l'émetteur et le récepteur ou le réflecteur (26) traversent la base de palette (34), et la lumière transmise est reçue directement ou via un réflecteur (26) par le récepteur (14), et **en ce que** l'unité d'évaluation (16) comprend des moyens pour déterminer et ajuster un seuil de détection (S) et **en ce que** le signal de détection peut-être émis si le signal reçu (I) est inférieur au seuil de détection (S) si la base de palettes (34) interrompt seulement une partie de la lumière transmise (22).

2. Capteur selon la revendication 1, **caractérisé en ce que** le récepteur (14) est constitué comme une photodiode simple.

3. Capteur selon l'une quelconque des revendications précédentes, **caractérisé en ce qu'**un système optique de réception (30) est alloué au récepteur (14).

4. Capteur selon la revendication 3, **caractérisé en ce que** la lumière transmise est presque parallèle par le système optique de transmission (24).

5. Capteur selon la revendication 3 ou 4, **caractérisé en ce que** le système optique de transmission et/ou de réception (24, 30) comprend une lentille de Fresnel.

6. Capteur selon l'une quelconque des revendications précédente, **caractérisé en ce qu'**au moins l'émetteur (12) avec le système optique de transmission (24) éventuellement prévu est fourni dans un boîtier de capteur (18) avec une fenêtre de devant (20) et la fenêtre de devant (20) est imprimée dans des sections avec un motif qui absorbe la lumière transmise pour l'homogénéisation de la lumière transmise.

7. Capteur optoélectronique selon l'une quelconque des revendications précédente, **caractérisé en ce que** ledit émetteur (12), récepteur (14) et unité d'évaluation (16) sont disposés ensemble dans le boîtier du capteur (18).

8. Capteur optoélectronique selon la revendication 7, **caractérisé en ce qu'**un diviseur optique (31) est disposé entre l'émetteur (12) et possiblement le système optique de transmission (24) et le récepteur (16) et possiblement le système optique de réception (30).

9. Procédé de détection des palettes (32) avec un capteur optoélectronique selon l'une quelconque des revendications précédentes **caractérisé par** les étapes suivantes:

  - Transmettre une lumière parallèle (22) qui a une forme ligne transversale la direction du faisceau dans un plan de détection en continu,
  - Recevoir de la lumière transmise (22) avec un récepteur (14) et fournir un signal électronique de réception (I), où la lumière transmise (22) est reçue directement ou via un réflecteur (26) par le récepteur (14) dans le cas d'un trajet libre optique,
  - Comparer le signal reçu (I) à l'interruption partielle de la lumière transmise (22) par un objet opaque (36) sous la forme d'une base de palettes (34) avec un seuil de détection (S) qui correspond à une définissable pourcentage du signal reçu à trajet optique libre,
  - Délivrer un signal de détection en réponse à cette comparaison,
  - Réglage du seuil de détection (S) après un certain temps (T).

10. Procédé de la revendication 9, **caractérisé en ce qu'**après ce certain temps (T) le signal reçu (I) à trajet optique libre est déterminé à nouveau et le seuil de détection (S) est adapté pour des ajustements.

11. Procédé selon la revendication 9 ou 10, **caractérisé en ce que** dans une phase d'enseignement (teach-in), le signal reçu sera enseigné au trajet optique libre.

EP 2 226 655 B1

**Fig. 1**

**Fig. 2**

8

34

22

**Fig. 3**

z

y

22

**Fig. 4**

20

21E

21S

z

y

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1503226 A2
- EP 0891044 B1
- US 5496996 A
- DE 19914114 A1
- US 5608207 A